# EUROPÄISCHE PATENTANMELDUNG

(11) **EP 4 112 257 A1**
(43) Veröffentlichungstag der Anmeldung: **04.01.2023**
(21) Anmeldenummer: 21182821.5
(22) Anmeldetag: 30.06.2021
(51) Int. Cl.: B27B 17/02

(54) **FÜHRUNGSSCHIENE FÜR EINE MOTORKETTENSÄGE**

(71) Anmelder: Andreas Stihl AG & Co. KG, 71336 Waiblingen (DE)
(72) Erfinder: SCHULZ, Matthias, 71691 Freiberg/Neckar (DE); LUX, Thomas, 73553 Alfdorf (DE); MÜLLER, Matthias, 73614 Schorndorf (DE); MAIER, Georg, 71394 Kernen i. R. (DE); SCHLEGEL, Martin, 73635 Rudersberg (DE)
(74) Vertreter: Karzel, Philipp

(57) **Zusammenfassung**

Die Erfindung betrifft eine Führungsschiene für eine Motorkettensäge. Der Mittelabschnitt (31) der Führungsschiene (2) bildet einen Nutgrund (23) der Führungsnut (4) und weist eine Randschicht (24) auf. Die Randschicht (24) umfasst mindestens einen gehärteten Bereich (25), der sich von einem ersten Ende (32) mit einer ersten Randschichttiefe (t₁) bis zu einem zweiten Ende (33) mit einer zweiten Randschichttiefe (t₂) erstreckt. Die erste Randschichttiefe (t₁) am ersten Ende (32) ist geringer als die zweite Randschichttiefe (t₂) am zweiten Ende (33). Die zweite Randschichttiefe (t₂) am zweiten Ende (33) ist größer 1 mm. Die erste Randschichttiefe (t₁) am ersten Ende (32) des gehärteten Bereiches (25) beträgt höchstens 3 mm.

## Beschreibung

Die Erfindung betrifft eine Führungsschiene für eine Motorkettensäge der im Oberbegriff des Anspruchs 1 angegebenen Gattung.

Führungsschienen für Motorkettensägen unterliegen im Betrieb hohem Verschleiß. Insbesondere Einlaufabschnitte und der Umlenkabschnitt der Führungsschiene sind aufgrund der hohen mechanischen Belastung im Betrieb stark verschleißbehaftet. Zur Verringerung des Verschleißes ist es im Stand der Technik bekannt, an der Schienenspitze einen drehbar gelagerten Umlenkstern am Umlenkabschnitt anzuordnen. Aus der EP 2 550 138 B1 ist auch bekannt, an der Schienenspitze einen gehärteten Einsatz oder dgl. vorzusehen. Der Aufbau derartiger Schienen ist jedoch vergleichsweise komplex.

Der Erfindung liegt die Aufgabe zugrunde, eine Führungsschiene der gattungsgemäßen Art anzugeben, die einen einfachen Aufbau und einen verringerten Verschleiß aufweist.

Diese Aufgabe wird mit einer Führungsschiene mit den Merkmalen des Anspruchs 1 gelöst.

Die Führungsschiene für eine Motorkettensäge weist eine umlaufende Führungsnut und einen zwischen den Seitenelementen angeordneten Mittelabschnitt auf. Der Mittelabschnitt bildet einen Nutgrund der Führungsnut. Der Mittelabschnitt weist eine Randschicht auf. Die Randschicht umfasst einen gehärteten Bereich. Der gehärtete Bereich erstreckt sich von seinem ersten Ende mit einer ersten Randschichttiefe bis zu einem zweiten Ende mit einer zweiten Randschichttiefe. Die erste Randschichttiefe und die zweite Randschichttiefe sind jeweils orthogonal zum Nutgrund gemessen. Die erste Randschichttiefe entspricht dem Abstand zwischen dem Nutgrund und dem ersten Ende des gehärteten Bereiches. Die zweite Randschichttiefe entspricht dem Abstand zwischen dem Nutgrund und dem zweiten Ende des gehärteten Bereiches. Die erste Randschichttiefe des gehärteten Bereiches am ersten Ende ist geringer als die zweite Randschichttiefe des gehärteten Bereiches am zweiten Ende. Die zweite Randschichttiefe des gehärteten Bereiches am zweiten Ende ist größer 1mm. Die Randschichttiefe am ersten Ende des gehärteten Bereiches beträgt höchstens 3 mm. Je näher sich der gehärtete Bereich am Nutgrund befindet, desto größer ist der Widerstand gegen Verschleiß, also die Verschleißfestigkeit. Demnach ist es vorteilhaft, wenn die Randschichttiefe am ersten Ende des gehärteten Bereiches höchstens 1,5 mm, besonders bevorzugt höchstens 0,5 mm beträgt. Besonders vorteilhaft ist es, wenn der gehärtete Bereich sich bis zum Nutgrund der Führungsnut erstreckt.

Im Betrieb einer Motorkettensäge ist herkömmlicherweise die Sägekette über ihre Verbindungsglieder auf den Führungsflächen der Führungsschiene abgestützt. Die Treibglieder der Sägekette weisen dabei einen Abstand zum Nutgrund auf. Kommt es zum Verschleiß der Führungsflächen, kann sich der Abstand zwischen Treibgliedern und Nutgrund derart reduzieren, bis sich die Treibglieder und der Nutgrund kontaktieren. In diesem Zustand liegt die Sägekette über ihre Treibglieder auf dem Nutgrund und über ihre Verbindungsglieder auf den Führungsflächen der Führungsschiene auf. Durch die Ausbildung eines gehärteten Bereiches in der Randschicht des Nutgrundes wird einem Verschleiß der Führungsschiene am Nutgrund entgegengewirkt. Da die Sägekette mit ihren Treibgliedern am Nutgrund aufliegt, sind die auf die Führungsflächen wirkenden Kräfte und damit auch der Verschleiß an den Führungsflächen der Führungsschiene reduziert. Somit kann eine weitere durch Verschleiß induzierte Formänderung der gesamten Führungsschiene vermieden, zumindest jedoch reduziert werden.

Der mindestens eine gehärtete Bereich ist bevorzugt induktionsgehärtet oder lasergehärtet. Bei einer derartigen Härtung des Werkstoffes wird dieser auf eine Temperatur in Höhe von etwa 900°C bis 1000°C erhitzt. Dabei findet eine Austenitisierung des Gefüges statt. Anschließend wird die Führungsschiene abgeschreckt, wodurch eine Umwandlung des Austenit-Gefüges in ein Martensit-Gefüge erfolgt. Ein martensitisches Gefüge weist eine deutlich höhere Härte als das Ausgangsgefüge auf, wodurch auch die Verschleißfestigkeit erhöht ist.

In einer alternativen Ausführung der Führungsschiene ist der mindestens eine gehärtete Bereich vorzugsweise durch eine Schweißung der Führungsschiene aufgehärtet. Der Vorteil der Schweißung besteht darin, dass diese zur Montage einer mehrteiligen Führungsschiene und zugleich zur partiellen Aufhärtung derselben eingesetzt werden kann. Die Schweißung weist einen Schweißmittelpunkt auf. Besonders vorteilhaft weist der Schweißmittelpunkt der Schweißung einen Abstand zum Nutgrund auf, der kleiner 6 mm beträgt. Damit kann sichergestellt werden, dass der von der Schweißung aufgehärtete Bereich ausreichend nah am Nutgrund der Führungsschiene liegt, um die Verschleißfestigkeit der Schiene zu erhöhen.

Es ist vorzugsweise vorgesehen, dass die Randschicht eine orthogonal zum Nutgrund gemessene Randschichttiefe aufweist, wobei die Randschichttiefe weniger als 50%, insbesondere weniger als 40%, vorzugsweise weniger als 30% einer maximalen Höhe des Mittelabschnittes der Führungsschiene beträgt. Die maximale Höhe entspricht dem maximalen Abstand zwischen dem Nutgrund an der ersten Längsseite und dem Nutgrund an der zweiten Längsseite der Führungsschiene. Der Abstand ist in Richtung senkrecht zur Längsmittelachse zu messen. Der Bereich des Mittelabschnittes radial innerhalb der Randschicht ist vorzugsweise ungehärtet, insbesondere vollständig ungehärtet.

Die Führungsschiene ist bevorzugt eine Vollschiene. Die Vollschiene besteht aus einem einzigen Werkstoff. Bei einer Vollschiene sind die Seitenelemente und der Mittelabschnitt einteilig ausgebildet. Die Führungsnut am Mittelabschnitt ist in die Führungsschiene zu spanen, insbesondere zu fräsen, vorzugsweise zu schleifen. Besonders große Führungsschienen werden üblicherweise als Vollschienen ausgebildet. Da bei Vollschienen die Montage der Seitenelemente und des Mittelabschnittes nicht notwendig sind, ist der gehärtete Bereich in der Randschicht des Nutgrundes bevorzugt durch das Laserhärten oder das Induktionshärten zu erzeugen. Alternativ kann die Härtung auch über eine Schweißung erfolgen. Hierbei reduziert sich die Funktion der Schweißung lediglich auf das Aufhärten, jedoch nicht mehr auf das Fügen einzelner Schienenteile, die beispielsweise die Seitenelemente und den Mittelabschnitt der Führungsschiene bilden.

Bevorzugt ist die Führungsschiene mehrteilig ausgebildet, wobei mindestens ein Seitenelement und der Mittelabschnitt durch die Schweißung miteinander verbunden sind, wobei die Schweißung die Aufhärtung des mindestens einen gehärteten Bereiches des Mittelabschnittes bewirkt. Alternativ können auch beide Seitenelemente und der Mittelabschnitt durch die Schweißung miteinander verbunden sein. Bevorzugt ist die Schweißung eine Buckelschweißung, vorzugsweise eine Punktschweißung. Sind Führungsschienen in großen Stückzahlen zu produzieren, eignet sich die Buckelschweißung aufgrund ihrer hohen Prozessgeschwindigkeit bei geringen Produktionskosten. Vorzugsweise umfasst die Schweißung mehrere Schweißpunkte, wobei benachbarte Schweißpunkte einen Abstand von höchstens 15 mm, insbesondere von höchstens 10 mm, vorzugsweise von höchstens 5 mm aufweisen. Der Abstand benachbarter Schweißpunkte bezieht sich auf deren Schweißmittelpunkte. Demnach bemisst sich der Abstand benachbarter Schweißpunkte vom Schweißmittelpunkt des einen Schweißpunktes zum Schweißmittelpunkt des benachbarten Schweißpunktes. Je geringer der Abstand der einzelnen Schweißpunkte zueinander gewählt ist, desto gleichmäßiger ist der Härteverlauf der Führungsschiene. Bevorzugt weisen die Schweißpunkte einen konstanten Abstand zur Führungsnut auf. Der Abstand benachbarter Schweißpunkte ist in Bewegungsrichtung der auf der Führungsschiene vorgesehen Sägekette zu messen. Bei ausreichend kleinem Abstand benachbarter Schweißpunkte kann eine ausgeprägte Wellenkontur der Führungsschiene durch auftretenden Verschleiß vermieden werden. Alternativ kann die Schweißung eine Laserschweißung sein. Dies ermöglicht eine besonders gleichförmige, zumindest teilweise Aufhärtung der Randschicht des Mittelabschnittes. Ist die Schweißung als eine Buckelschweißung oder eine Punktschweißung ausgeführt, so ist der Schweißmittelpunkt als der tatsächliche geometrische Mittelpunkt der Schweißung zu verstehen. Ist die Schweißung als eine Laserschweißung ausgebildet, so entspricht der Schweißmittelpunkt der orthogonal zum Nutgrund gemessenen Mitte zwischen dem ersten Ende und dem Zweiten Ende des gehärteten Bereiches, in anderen Worten einer Mittellinie der Schweißnaht.

Es ist vorteilhaft vorgesehen, dass sich der gehärtete Bereich der Randschicht in Bewegungsrichtung einer auf der Führungsschiene führbaren Sägekette über einen Verschleißabschnitt erstreckt. Vorzugsweise weist die Führungsnut der Führungsschiene im Verschleißabschnitt eine erste Nuttiefe auf, wobei die erste Nuttiefe gegenüber einer außerhalb des Verschleißabschnitts vorgesehenen, zweiten Nuttiefe reduziert ist. Die erste Nuttiefe ist insbesondere derart angepasst, dass eine für die Führungsschiene vorgesehene Sägekette mit ihren Treibgliedern den Nutgrund im Verschleißabschnitt kontaktiert. Somit ist bereits im Auslieferzustand der Führungsschiene die Sägekette über die Treibglieder am Nutgrund der Führungsnut sowie über die Verbindungsglieder an den Führungsflächen der Seitenelemente abgestützt. Die von der Sägekette ausgehende Kontaktkraft wird somit auch auf den Nutgrund übertragen, wodurch die Führungsflächen entlastet werden. Somit wird einer Formänderung der Führungsschiene bereits im und/oder kurz nach dem Auslieferzustand entgegengewirkt.

Besonders bevorzugt weist die Führungsschiene eine erste Längsseite und eine zweite Längsseite auf, wobei an jedem Seitenelement eine Führungsfläche ausgebildet ist, die sich entlang der Längsseiten der Führungsschiene erstrecken, wobei die Führungsflächen zumindest im Verschleißabschnitt aufgehärtet sind. Somit wird die Verschleißfestigkeit auch an den Führungsflächen erhöht, wodurch einer Formänderung der gesamten Führungsschiene entgegengewirkt wird. Insbesondere kontaktieren die Treibglieder den Nutgrund im Verschleißabschnitt bereits zu einem Zeitpunkt, in dem die Sägekette mit ihren Gliedern noch auf einer insbesondere durch Induktivhärtung gehärteten Zone der Führungsflächen aufliegt.

Selbstverständlich kann eine Aufhärtung an mehreren Abschnitten des Mittelabschnittes der Führungsschiene vorgesehen sein. Die erfindungsgemäße Aufhärtung sollte an all den Bereichen der Führungsschiene vorgesehen sein, die besonders verschleißbelastet sind. Die Randschicht des Mittelabschnitts weist daher vorzugsweise mehrere gehärtete Bereiche auf. Vorzugsweise ist an dem Umlenkabschnitt der Führungsschiene mindestens ein gehärteter Bereich ausgebildet. Der Umlenkabschnitt der Führungsschiene ist insbesondere bei Führungsschienen ohne Umlenkstern höchst beansprucht.

Es ist vorteilhaft vorgesehen, dass die Führungsschiene mindesten einen Einlaufbereich und mindestens einen Auslaufbereich umfasst. Als ein Einlaufbereich ist der Abschnitt der Führungsschiene zu verstehen, in dem die Sägekette die Führungsschiene kontaktiert, nachdem diese vorher nicht durch die Führungsschiene geführt wurde. Ein solcher Einlaufbereich ist beispielsweise am Einspannende der Führungsschiene vorgesehen, welcher unmittelbar benachbart zum Antriebsritzel angeordnet ist. Ein weiterer Einlaufbereich liegt bei Führungsschienen mit Umlenkstern vor. Die Sägekette wird über den Umlenkstern entlang des Umlenkabschnittes geführt und dabei von der Führungsfläche der Seitenelemente abgehoben. Dadurch ist die Reibung zwischen Sägekette und Führungsschiene im Bereich des Umlenkabschnittes minimiert. Unmittelbar benachbart zum Umlenkstern in Bewegungsrichtung der Sägekette trifft die Sägekette auf die Führungsschiene auf. Dieser Abschnitt bildet einen weiteren Einlaufbereich der Führungsschiene, der einer hohen Verschleißbeanspruchung unterliegt. Als ein Auslaufbereich ist der Abschnitt der Führungsschiene zu verstehen, in dem die Sägekette von der Führungsschiene abhebt. Ein derartiger Auslaufbereich befindet sich beispielsweise benachbart zum Antriebsritzel entgegen der Bewegungsrichtung der Sägekette. Ein weiterer Auslaufbereich ist bei einer Führungsschiene mit Umlenkstern benachbart zum Umlenkstern entgegen der Bewegungsrichtung der Sägekette vorgesehen. Vorzugsweise ist an mindestens einem Einlaufbereich und/oder an mindestens einem Auslaufbereich ein gehärteter Bereich ausgebildet. Selbstverständlich können an allen Einlaufbereichen und an allen Auslaufbereichen gehärtete Bereiche vorgesehen sein.

Ausführungsbeispiele der Erfindung werden im Folgenden anhand der Zeichnung erläutert. Es zeigen:
- Fig. 1: eine schematische Seitenansicht einer Motorkettensäge mit einer daran angeordneten Führungsschiene,
- Fig. 2: eine Seitenansicht einer nach dem Stand der Technik bekannten Führungsschiene,
- Fig. 3: eine schematische Seitenansicht einer erfindungsgemäßen Führungsschiene mit gehärtetem Bereich und reduzierter Nuttiefe im Umlenkabschnitt,
- Fig. 4: eine schematische Seitenansicht eines weiteren Ausführungsbeispiels einer Führungsschiene mit gehärtetem Bereich und reduzierter Nuttiefe außerhalb des Umlenkabschnittes,
- Fig. 5: eine schematische Seitenansicht eines Ausführungsbeispiels einer Führungsschiene mit Umlenkstern mit gehärtetem Bereich und reduzierter Nuttiefe,
- Fig. 6: eine schematische Seitenansicht eines Ausführungsbeispiels einer Führungsschiene als Vollschiene mit gehärtetem Bereich und reduzierter Nuttiefe im Umlenkabschnitt,
- Fig. 7: eine schematische Seitenansicht eines Ausführungsbeispiels einer Führungsschiene als Vollschiene mit gehärtetem Bereich und reduzierter Nuttiefe außerhalb des Umlenkabschnittes,

- Fig. 8: eine schematische, ausschnittsweise Seitendarstellung des gehärteten Bereiches einer Führungsschiene und
- Fig. 9: ein schematischer, ausschnittsweiser Querschnitt eines gehärteten Bereiches einer Führungsschiene entlang der Schnittlinie in Richtung der Pfeile IX gemäß Fig. 3.

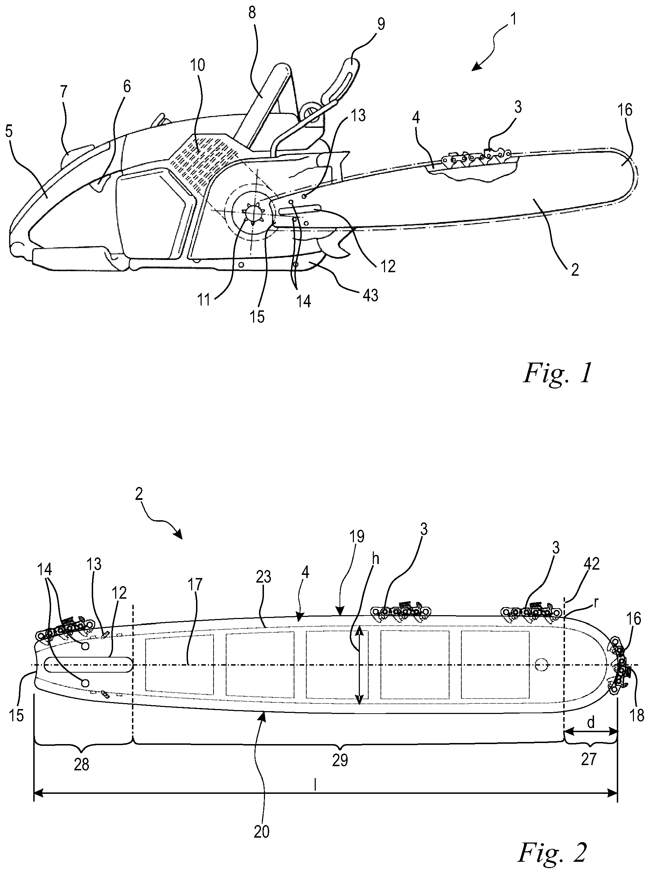

Fig. 1 zeigt schematisch eine Motorkettensäge 1, die eine Führungsschiene 2 aufweist. Die Führungsschiene 2 weist eine Führungsnut 4 auf, in der eine Sägekette 3 umlaufend geführt ist. Die Sägekette 3 ist über ein Antriebsritzel 11 geführt, das im Betrieb von einem Antriebsmotor 10 rotierend angetrieben ist und so die Sägekette 3 am Umfang der Führungsschiene 2 umlaufend bewegt. Der Antriebsmotor 10 ist in Fig. 1 schematisch als Verbrennungsmotor dargestellt. Der Antriebsmotor 10 kann jedoch auch ein von einem Akku oder über ein Kabel mit Energie versorgter Elektromotor sein. Die Führungsschiene 2 weist ein Einspannende 15 auf, an dem die Führungsschiene 2 an einem Gehäuse 43 der Motorkettensäge 1 festgelegt ist. Das Antriebsritzel 11 liegt benachbart zum Einspannende 15. Das dem Gehäuse 43 entfernt angeordnete Ende der Führungsschiene 2 bildet ein freies Ende 16, an dem die Sägekette 3 umgelenkt wird. Die Führungsschiene 2 weist nahe dem Einspannende 15 einen Führungsschlitz 12 auf, durch den nicht dargestellte Spannelemente ragen, mit denen die Führungsschiene 2 an dem Gehäuse 43 der Motorkettensäge 1 fixiert ist. Die Führungsschiene 2 weist vorteilhaft mindestens eine, im Ausführungsbeispiel zwei Spannöffnungen 14 auf, an denen nicht dargestellte Spannmittel zum Spannen der Sägekette 3 durch Bewegung der Führungsschiene 2 gegenüber dem Gehäuse 43 eingreifen können. Die Führungsschiene 2 weist im Ausführungsbeispiel außerdem mindestens eine Ölzuführöffnung 13 auf, über die von der Außenseite der Führungsschiene 2 in die Führungsnut 4 Schmiermittel wie Öl eingebracht werden kann.

Zum Führen der Motorkettensäge 1 im Betrieb weist die Motorkettensäge 1 einen Handgriff 5 auf, an dem Bedienelemente gelagert sind. Bedienelemente können beispielsweise ein Gashebel 6 und eine Gashebelsperre 7 sein. Zum Führen der Motorkettensäge 1 ist außerdem ein Griffbügel 8 vorgesehen, der das Gehäuse 43 übergreift. An der Führungsschiene 2 zugewandten Seite des Griffbügels 8 ist ein Handschutz 9 vorgesehen, der auch zum Auslösen einer nicht dargestellten Kettenbremsvorrichtung dienen kann.

Die erfindungsgemäße Führungsschiene 1 kann auch für andere Arbeitsgeräte mit Führungsschienen, beispielsweise Gehölzschneider oder Hochentaster, vorgesehen sein.

Fig. 2 zeigt die Führungsschiene 2 im Einzelnen. Die Führungsnut 4 weist einen Nutgrund 23 auf, der in den Figuren 2 bis 8 durch eine gestrichelte Linie angedeutet ist. Die Führungsschiene 2 weist eine Längsmittelachse 17 auf, die sich vom Einspannende 15 zum freien Ende 16 der Führungsschiene 2 in der geometrischen Mitte der Führungsschiene 2 erstreckt. Die Führungsschiene 2 weist einen Einspannabschnitt 28 auf, der sich vom Einspannende 15 ausgehend entlang des Führungsschlitzes 12 bis zum Längsabschnitt 29 der Führungsschiene 2 erstreckt. Der Führungsschlitz 12 kann dabei wie in Fig. 2 dargestellt zum Einspannende 15 hin geschlossen oder zum Einspannende 15 hin offen sein. Im Einspannabschnitt 28 sind außerdem die Spannöffnungen 14 angeordnet. Vorteilhaft ist auch die mindestens eine Ölzuführöffnung 13 im Einspannabschnitt 28 angeordnet. An dem dem freien Ende 16 der Führungsschiene 2 zugewandten Ende des Führungsschlitzes 12 endet der Einspannabschnitt 28.

Die Führungsschiene 2 besitzt eine erste Längsseite 19 und eine zweite Längsseite 20, an denen die Führungsnut 4 entlangläuft. An der ersten Längsseite 19 bewegt sich die Sägekette 3 im Betrieb vom Einspannende 15 zum freien Ende 16 und an der zweiten Längsseite 20 bewegt sich die Sägekette 3 im Betrieb vom freien Ende 16 zum Einspannende 15. Die Sägekette ist in Fig. 2 sowie den nachfolgenden Darstellungen zur besseren Übersicht nur abschnittsweise dargestellt. Am freien Ende 16 der Führungsschiene 2 erstreckt sich ein Umlenkabschnitt 27. Die Führungsschiene 2 weist eine Schienenspitze 18 auf. Die Schienenspitze 18 ist der Bereich, in dem die Längsmittelachse 17 den Umlenkabschnitt 27 in der in Figur 2 dargestellten Seitenansicht schneidet. Die in Figur 2 dargestellte Seitenansicht ist eine Ansicht senkrecht auf die Flachseite der Führungsschiene 2. Der Umlenkabschnitt 27 erstreckt sich in Richtung der Längsmittelachse 17 von der Schienenspitze 18 bis zu einer Ebene 42. Die Ebene 42 ist die gedachte Ebene, die senkrecht zur Längsmittelachse 17 liegt und in Seitenansicht auf die Flachseite der Führungsschiene 2, wie in Fig. 2 gezeigt, durch den Punkt verläuft, in dem die Außenkontur der Führungsschiene 2 einen Radius r von 100 mm aufweist. Im Umlenkabschnitt 27 ist der Radius r kleiner als 100 mm. In Richtung der Längsmittelachse 17 verläuft zwischen dem Umlenkabschnitt 27 und dem Einspannabschnitt 28 der Längsabschnitt 29. Im Längsabschnitt 29 ist der Radius r der Außenkontur der Führungsschiene 2 größer als 100 mm. Der Umlenkabschnitt 27 erstreckt sich vorzugsweise über eine Länge d, die parallel zur Längsmittelachse 17 gemessen ist und die vorzugsweise zwischen 5% und 20% der Gesamtlänge 1 der Führungsschiene 2 beträgt. Die Gesamtlänge 1 ist dabei parallel zur Längsmittelachse 17 gemessen. Die Längsseiten 19 und 20 erstrecken sich sowohl im Längsabschnitt 29 als auch im Einspannabschnitt 28 am Umfang der Führungsschiene 2. Der Umfang der Führungsschiene 2 im Umlenkabschnitt 27 verbindet die beiden Längsseiten 19 und 20.

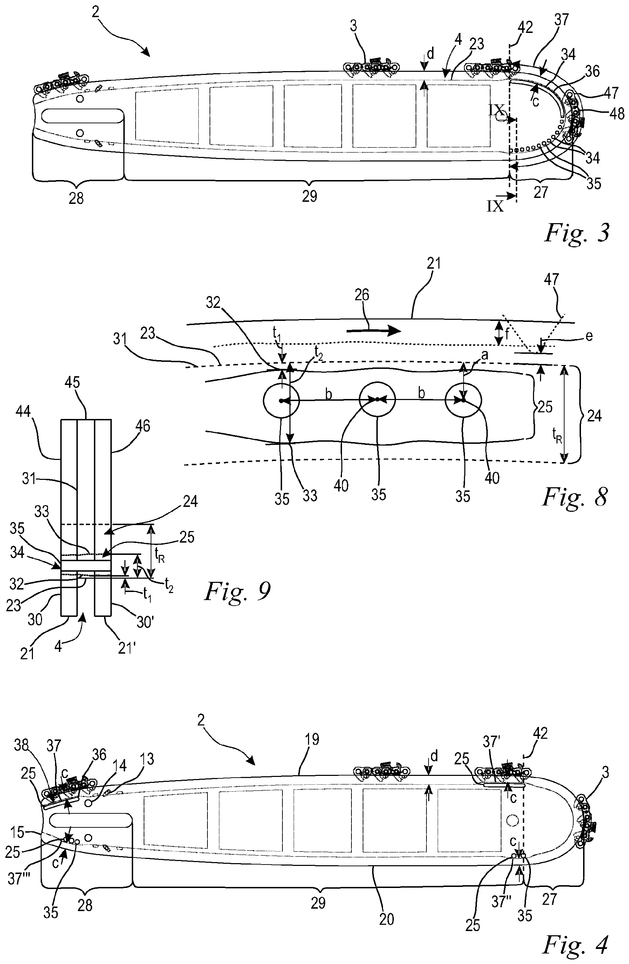

In Fig. 3 ist in einer schematischen Seitenansicht die Führungsschiene 2 als eine dreiteilige Führungsschiene gezeigt. In Fig. 9 ist ein schematischer Querschnitt einer solchen dreiteiligen Führungsschiene 2 gezeigt. Diese umfasst eine erste Seitenplatte 44, eine zweite Seitenplatte 46 und eine zwischen der ersten Seitenplatte 44 und der zweiten Seitenplatte 46 angeordnete Mittelplatte 45. Die Seitenplatten 44, 46 bilden somit zwei Seitenelemente 30, 30' der Führungsschiene 2, wobei die Mittelplatte 45 einen Mittelabschnitt 31 der Führungsschiene 2 bildet. Im Ausführungsbeispiel sind die erste Seitenplatte 44, die zweite Seitenplatte 46 und die Mittelplatte 45 über Schweißungen 34 miteinander verbunden. Wie in Fig. 9 gezeigt, ist an der Umfangskontur jedes Seitenelementes 30, 30' eine Führungsfläche 21, 21' ausgebildet. Das erste Seitenelement 30 begrenzt eine erste Nutseite der Führungsnut 4 mit seiner Innenseite. Das erste Seitenelement 30 weist an seinem Außenumfang die erste Führungsfläche 21 auf. Das zweite Seitenelement 30' begrenzt eine zweite Nutseite der Führungsnut 4 mit seiner Innenseite. Das zweite Seitenelement 30' weist an seinem Außenumfang die zweite Führungsfläche 21' auf. Der Nutgrund 23, der sich von dem ersten Seitenelement 30 zum zweiten Seitenelement 30' erstreckt, wird vom Mittelabschnitt 31 gebildet. Im Ausführungsbeispiel erstrecken sich die Schweißungen 34 über die gesamte Breite der Führungsschiene 2. Alternativ können sich die Schweißungen 34 auch von lediglich einem der beiden Seitenelemente 30, 30' bis zum Mittelabschnitt 31 erstrecken.

In einer weiteren alternativen Ausgestaltung der Führungsschiene kann vorgesehen sein, dass der Mittelabschnitt 31 mit einer der Seitenelemente 30, 30' einteilig ausgebildet ist und mit dem anderen Seitenelement 30, 30' über die Schweißung 34 verbunden ist. Alternativ kann auch vorgesehen sein, dass der Mittelabschnitt 31 aus mehreren Teilen gebildet ist, wobei ein Teil des Mittelabschnittes 31 mit dem einen Seitenelement 30 und ein weiteres Teil des Mittelabschnittes 31 mit dem anderen Seitenelement 30' einteilig ausgebildet ist, wobei die beiden Seitenelemente 30, 30' über Schweißungen 34 miteinander verbunden sind.

Wie in Fig. 3 gezeigt, sind die Seitenelemente 30, 30' mit dem Mittelabschnitt 31 über mehrere Schweißungen 34 zusammengefügt. Die Schweißungen 34 sind im Ausführungsbeispiel im Umlenkabschnitt 27 angeordnet. Die Schweißungen 34 sind in bevorzugter Ausführung als Buckelschweißung ausgeführt. Alternativ können die Schweißungen 34 auch Punktschweißungen sein. In einer weiteren Gestaltung der Führungsschiene 2 kann die Schweißung 34 auch über eine Laserschweißung erfolgen. Auch andere Schweißverfahren können zur Fügung der Führungsschiene 2 eingesetzt werden. In Fig. 3 ist im Umlenkabschnitt 27 schematisch die Möglichkeit des Einsatzes verschiedener Schweißverfahren angedeutet. In der oberen Hälfte der Führungsschiene 2 ist eine Schweißnaht 36, beispielsweise erzeugt durch Laserschweißen, in der unteren Hälfte der Führungsschiene 2 sind einzelne Schweißpunkte 35, beispielsweise erzeugt durch Buckelschweißen oder Punktschweißen, gezeigt. Bei derartigen Schweißungen 34 erfolgt das Aufhärteverfahren des Mittelabschnittes 31 vorzugsweise beabstandet zum Nutgrund 23 in Richtung zum Nutgrund 23 hin. Die Führungsschiene 2 wird vorzugsweise nur mittels eines einzigen Verfahrens gefügt.

Wie in den Figuren 8 und 9 gezeigt, ist am Mittelabschnitt 31 ein gehärteter Bereich 25 ausgebildet. Dieser gehärtete Bereich 25 liegt innerhalb einer Randschicht 24 des Mittelabschnittes 31. Die Randschicht 24 erstreckt sich ausgehend vom Nutgrund 23 des Mittelabschnittes 31 über eine Randschichttiefe t_{R}. Die Randschichttiefe t_{R} ist orthogonal zum Nutgrund 23 gemessen. Im Ausführungsbeispiel beträgt die Randschichttiefe t_{R} weniger als 50%, insbesondere weniger als 40%, vorzugsweise weniger als 30% einer maximalen Höhe (h) des Mittelabschnittes 31 der Führungsschiene 2. Die maximale Höhe h entspricht dem maximalen Abstand zwischen dem Nutgrund 23 an der ersten Längsseite 19 und dem Nutgrund 23 an der zweiten Längsseite 20 der Führungsschiene 2. Der Abstand ist in Richtung senkrecht zur Längsmittelachse 17 zu messen. Der Bereich des Mittelabschnittes 31 radial innerhalb der Randschicht 24 ist vorzugsweise ungehärtet, insbesondere vollständig ungehärtet. In einer alternativen Ausführung der Führungsschiene 2 können auch andere Randschichttiefen t_{R} zweckmäßig sein.

Die Schweißung 34 bewirkt eine Aufhärtung gegenüber dem Grundwerkstoff des Mittelabschnittes 31, die sich ausgehend von der Schweißzone über eine Einflusszone erstreckt. Die Schweißzone und die Einflusszone bilden gemeinsam den gehärteten Bereich 25. Durch die Schweißung werden der Mittelabschnitt 31 sowie die Seitenelemente 30, 30' lokal aufgeschmolzen, wodurch in der Schweißzone ein Mischgefüge entsteht. Die dabei vorliegende Temperatur führt zu einer Austenitisierung in der Schweißzone. Da die Schweißzone im Verhältnis zur Führungsschiene 2 relativ klein ist, kühlt diese durch den die Schweißzone umgebenden Werkstoff sowie durch die Umgebungsluft schnell ab. Dieser Vorgang bewirkt eine Abschreckung der Schweißung, wodurch die Erzeugung einer martensitischen Gefügestruktur begünstigt wird. In der Einflusszone entsteht kein Schmelzbad, dennoch ist die Temperatur ausreichend hoch, um eine Umwandlungshärtung nach obigem Prinzip zu erzeugen. Es kann zweckmäßig sein, eine gezielte Abschreckung durch ein Öl-Bad oder ein WasserBad vorzunehmen. Im bevorzugten Ausführungsbeispiel erfolgt die Abschreckung durch Druckluft. Demnach ist die Führungsschiene 2 nach der Härtung druckluftgekühlt.

Vorzugsweise ist der Mittelabschnitt 31 der Führungsschiene 2 aus einem anderen Werkstoff als die Seitenelemente 30, 30' gebildet. Der Mittelabschnitt 31 ist in bevorzugter Ausführung aus einem Kohlenstoff- armen Stahl, insbesondere aus einem DC01, oder kohlenstofffreien Stahl, wodurch der Mittelabschnitt 31 gegenüber den Seitenelementen 30, 30' eine höhere Elastizität sowie Duktilität aufweist. Die Seitenelemente 30, 30' sind vorzugsweise aus einem Vergütungsstahl mit hohem Kohlenstoff-Gehalt, insbesondere aus 50CrMo4, gebildet. Durch die Verschmelzung des Mittelabschnittes 31 mit den Seitenelementen 30, 30' an der Schweißzone vermischen sich die Werkstoffe, wodurch in der Schweißzone auch am Mittelabschnitt 31 ausreichend Kohlenstoff vorliegt, so dass eine Martensit-Bildung im Mittelabschnitt 31 erfolgen kann.

In den Figuren 8 und 9 ist der gehärtete Bereich 25 schematisch dargestellt. Der gehärtete Bereich 25 erstreckt sich in Richtung orthogonal zum Nutgrund 23 von einem ersten Ende 32 bis zu einem zweiten Ende 33. Der gehärtete Bereich 25 liegt vollständig innerhalb der Randschicht 24 des Mittelabschnittes 31. Der gehärtete Bereich 25 weist an seinem ersten Ende 32 eine orthogonal zum Nutgrund 23 gemessene Randschichttiefe t₁ auf. Zudem weist der gehärtete Bereich 25 an seinem zweiten Ende 33 eine orthogonal zum Nutgrund 23 gemessene Randschichttiefe t₂ auf. Die Randschichttiefe t₁ am ersten Ende 32 des gehärteten Bereiches 25 ist geringer als die Randschichttiefe t₂ am zweiten Ende 33 des gehärteten Bereiches 25. Im bevorzugten Ausführungsbeispiel ist der gehärtete Bereich 25 derart in der Randschicht 24 ausgebildet, dass die Randschichttiefe t₁ am ersten Ende 32 des gehärteten Bereiches 25 höchstens 3 mm, insbesondere höchstens 1,5 mm, vorzugsweise höchstens 0,5 mm beträgt. In besonders bevorzugter Ausführung der Führungsschiene 2 hat die Randschichttiefe t₁ am ersten Ende 32 des gehärteten Bereiches 25 den Wert null. Demnach liegt das erste Ende 32 des gehärteten Bereiches 25 am Nutgrund 23. Ferner ist der gehärtete Bereich 25 derart in der Randschicht 24 ausgebildet, dass die Randschichttiefe t₂ am zweiten Ende 33 des gehärteten Bereiches 25 mindestens 1 mm, insbesondere mindestens 5 mm, vorzugsweise mindestens 10 mm beträgt. Die Randschichttiefe t₂ am zweiten Ende 33 des gehärteten Bereiches 25 beträgt höchstens die Randschichttiefe t_{R} der Randschicht 24.

Wie in Fig. 8 gezeigt, weist die Schweißung 34 einen Schweißmittelpunkt 40 auf. Zwischen dem Schweißmittelpunkt 40 und dem Nutgrund 23 ist ein Abstand a vorgesehen. Der Abstand a ist vorzugsweise kleiner 6 mm. In besonders bevorzugter Ausführung der Führungsschiene 2 beträgt der Abstand a zwischen Nutgrund 23 und Schweißmittelpunkt 40 weniger als 5 mm, insbesondere weniger als 4 mm, vorteilhaft weniger als 3 mm. Je geringer der Abstand a zwischen dem Schweißmittelpunkt 40 und dem Nutgrund 23 gewählt wird, desto geringer ist auch der Abstand zwischen dem gehärteten Bereich 25 und dem Nutgrund 23. Der Abstand a zwischen dem Schweißmittelpunkt 40 der Schweißung 34 und dem Nutgrund 23 ist so zu wählen, dass der gehärtete Bereich sich möglichst bis zum Nutgrund 23 erstreckt. Dabei sollte die Schweißzone jedoch nicht Teile des Nutgrundes 23 umfassen, da dieser sonst durch das Schmelzbad seine Formkontur verlieren würde. In diesem Fall wäre gegebenenfalls sogar eine Nachbearbeitung der Führungsschiene 2 notwendig.

Wie in Fig. 8 gezeigt, ist die Schweißung 34 aus mehreren Schweißpunkten 35 gebildet. Die Schweißunkte 35 sind entlang der Bewegungsrichtung 26 der Sägekette 3 angeordnet. Derartige Schweißpunkte 35 können insbesondere bei einer Buckelschweißung oder bei einer Punktschweißung entstehen. Benachbarte Schweißpunkte 35 weisen einen Abstand b zwischen ihren Schweißmittelpunkten 40 zueinander auf, wobei der Abstand b höchstens 15 mm, insbesondere höchstens 10 mm, vorzugsweise höchstens 5 mm beträgt. Mit geringer werdendem Abstand b stellt sich ein gleichmäßigerer Härteverlauf, also gleichmäßigere Grenzlinien an den Enden 32, 33 des gehärteten Bereiches 25 ein. Dies hat zum Vorteil, dass bei Verschleiß der Führungsschiene 2 der Nutgrund 23 eine vergleichsweise gleichmäßige Struktur beibehält und eine ausgeprägte Wellenstruktur des Nutgrundes 23 vermieden werden kann. Dieser Umstand begünstigt die Laufeigenschaften der Führungsschiene 2. Ferner kann bei der Schweißung 34, insbesondere bei einer Buckelschweißung, die Stromstärke reduziert bzw. derart angepasst werden, dass sich der Durchmesser der Schweißpunkte 35 reduziert. Dies hat zur Folge, dass der Abstand b benachbarter Schweißpunkte 35 reduziert werden kann, und dass der Abstand a der Schweißmittelpunkte zum Nutgrund ebenfalls reduziert werden kann. Dadurch können die Grenzlinien an den Enden 32, 33 des gehärteten Bereiches 25 weiter geglättet werden. Wird die Schweißung 34 in Form einer einzigen Schweißnaht 36 beispielsweise durch ein Laserschweißverfahren gebildet, ergibt sich eine gleichmäßig verlaufende Grenzlinie des gehärteten Bereiches 25. Sind mehrere Schweißnähte 36 vorgesehen sind, sind vorzugsweise die Abstände benachbarter Schweißnähte 36 analog den Abständen benachbarter Schweißpunkte 35 zu wählen. Wie in Fig. 3 gezeigt, erstreckt sich die Schweißung 34 und damit auch der gehärtete Bereich 25 über den gesamten Umlenkabschnitt 27 der Führungsschiene.

Wie in den Figuren 3 und 4 gezeigt, weist die Führungsnut 4 eine erste Nuttiefe c und eine zweite Nuttiefe d auf. Im bevorzugten Ausführungsbeispiel weist die Führungsnut 4 der Führungsschiene 2 eine zumindest teilweise derart angepasste erste Nuttiefe c auf, dass eine für die Führungsschiene 2 vorgesehene Sägekette 3 mit ihren Treibgliedern 47 den Nutgrund 23 im Auslieferungszustand kontaktiert oder zumindest beinahe kontaktiert. Zwischen dem Nutgrund 23 und der Treibgliedspitze ist in montiertem Zustand der Sägekette 3 ein Abstand e vorgesehen, der vorzugsweise kleiner 2 mm, insbesondere kleiner 1 mm, besonders bevorzugt kleiner 0,5 mm ist. Im bevorzugten Ausführungsbeispiel ist die erste Nuttiefe c an den Bereichen der Führungsschiene 2 angepasst, an welchen der Mittelabschnitt 31 in seiner Randschicht 24 den gehärteten Bereich 25 aufweist. Dieser Bereich ist nachfolgend als Verschleißabschnitt 37 bezeichnet, in welchem sich der gehärtete Bereich 25 der Randschicht 24 in Bewegungsrichtung 26 einer auf der Führungsschiene 2 führbaren Sägekette 3 erstreckt. Die angepasste erste Nuttiefe c der Führungsnut 4 im Verschleißbereich 37 ist geringer als die zweite Nuttiefe d außerhalb des Verschleißbereiches 37. Die angepasste erste Nuttiefe c der Führungsnut 4 erstreckt sich mindestens über 20%, vorzugsweise über mindestens 40%, vorteilhaft über mindestens 70% des Verschleißbereiches 37, insbesondere des Umlenkabschnittes 27. Es kann auch zweckmäßig sein, den gesamten Verschleißbereich 37, insbesondere den Umlenkabschnitt 27, mit einer angepassten, ersten Nuttiefe c zu versehen. Es kann auch zweckmäßig sein, die gesamte Führungsnut 4 mit einer angepassten ersten Nuttiefe c zu versehen. Die Führungsnut 4 ist im Verschleißabschnitt 37 derart ausgebildet, dass die Sägekette 3 über ihre Verbindungsglieder 48 an den Führungsflächen 21 der Seitenelemente 30, 30' und zum anderen über ihre Treibglieder 47 am Nutgrund 23 der Führungsnut 4 abgestützt ist. Somit werden die von der Sägekette 3 auf die Führungsschiene 2 wirkenden Kräfte nicht mehr alleinig auf die Führungsflächen 21, 21' übertragen, sondern zusätzlich auf den Nutgrund 23 des Mittelabschnittes 31 verteilt. Dadurch kann der Verschleiß an der Führungsschiene 2 reduziert werden. Vorzugsweise sind besonders in den Bereichen der Führungsschiene 2 sowohl eine Härtung des Mittelabschnittes 31 als auch eine Anpassung der ersten Nuttiefe c vorgesehen, in welchen besonders hohe Kräfte auf die Führungsschiene 2 wirken. Dies trifft im vorliegenden Ausführungsbeispiel nach Fig. 3 auf den gesamten Umlenkabschnitt 27 zu. Es kann auch zweckmäßig sein, andere Abschnitte der Führungsschiene 2 mit einer angepassten ersten Nuttiefe c sowie einer Härtung des Mittelabschnittes 31 zu versehen.

In besonders bevorzugter Ausführung der Führungsschiene 2 sind die Führungsflächen 21, 21' der Seitenelemente 30, 30' gehärtet. Die Führungsflächen 21, 21' sind vorzugsweise induktionsgehärtet, insbesondere lasergehärtet. Dadurch kann der Verschleißfestigkeit der Seitenelemente 30, 30' erhöht werden. Im bevorzugten Ausführungsbeispiel sind die Führungsflächen 21, 21' im Verschleißabschnitt 37 der Führungsschiene 2 gehärtet. Es kann aber auch zweckmäßig sein, die Führungsflächen in weiteren Bereichen der Führungsschiene 2, insbesondere sogar vollständig zu härten. In einer bevorzugten Ausführung der Führungsschiene 2 weisen die Seitenelemente 30, 30' eine Härtetiefe f auf, die sich ausgehend von den Führungsflächen 21, 21'jeweils senkrecht zu den Führungsflächen 21, 21' mindestens 2 mm, vorzugsweise mindestens 3 mm, insbesondere in etwa 4 mm erstreckt. Somit kann sichergestellt werden, dass bei Verschleiß der Seitenelemente 30, 30' die Treibglieder 47 am Nutgrund 23 zur Anlage kommen, noch bevor der an den Seitenelementen 30, 30' gehärtete Bereich verschlissen ist. Liegt die Sägekette 3 sowohl an den Führungsfläche 21, 21' als auch am Nutgrund 23 an, erfolgt im weiteren Betrieb des Arbeitsgerätes 1 ein gleichmäßiger Verschleiß der Führungsflächen 21, 21' sowie des Nutgrundes 23.

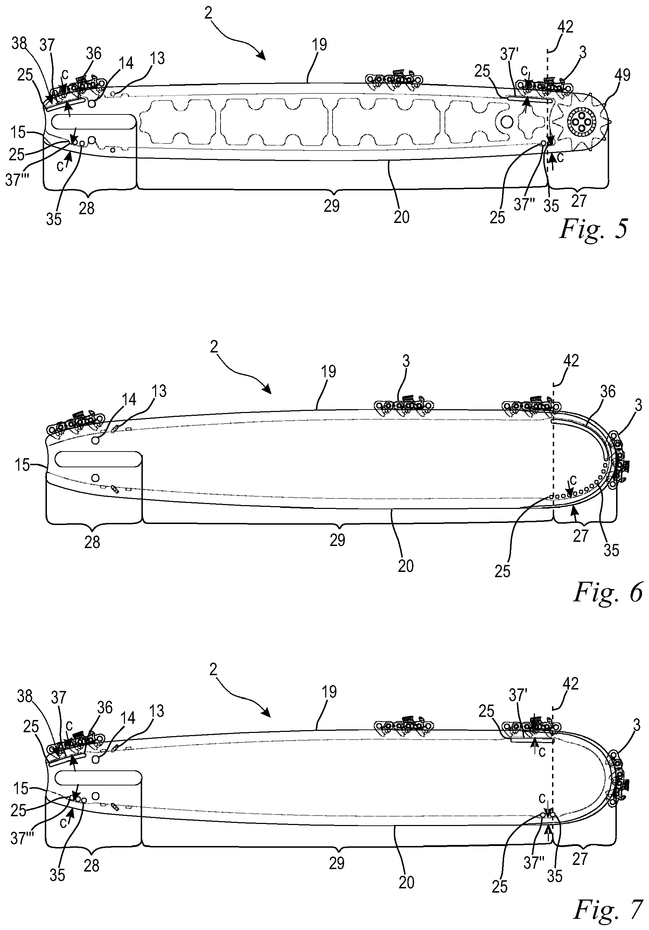

In Fig. 4 ist ein weiteres Ausführungsbeispiel gezeigt, in welchem die Randschicht 24 des Mittelabschnittes 31 mehrere gehärtete Bereiche 25 aufweist. Ferner umfasst die Führungsschiene 2 auch mehrere Verschleißabschnitte 37, 37', 37", 37'''. Ein erster Verschleißabschnitt 37 ist auf der ersten Längsseite 19 im Einspannabschnitt 28 der Führungsschiene 2 vorgesehen. Die Sägekette 3 wird ausgehend vom Antriebsritzel 11 zur Führungsschiene 2 geführt und kontaktiert die Führungsschiene 2 in dem ersten Verschleißabschnitt 37, der somit auch als Einlaufbereich 38 bezeichnet werden kann. Der erste Verschleißabschnitt 37 erstreckt sich etwa vom Einspannende 15 bis zur Spannöffnung 14, ohne diese jedoch mit einzuschließen. Ein zweiter Verschleißabschnitt 37' ist auf der ersten Längsseite 19 der Führungsschiene 2 vorgesehen und erstreckt sich vom Längsabschnitt 28 bis zum Umlenkabschnitt 27. Dabei ragt der zweite Verschleißabschnitt 37 nur teilweise in den Umlenkabschnitt 27 und nur teilweise in den Längsabschnitt 28. Der dritte Verschleißabschnitt 37" ist auf der zweiten Längsseite 20 der Führungsschiene 2 vorgesehen. Der dritte Verschleißabschnitt 37" der Führungsschiene 2 ist am Übergang vom Umlenkabschnitt 27 zum Längsabschnitt 29 angeordnet. Der vierte Verschleißabschnitt 37''' der Führungsschiene 2 ist ebenfalls an der zweiten Längsseite 20 der Führungsschiene 2 vorgesehen. Der vierte Verschleißabschnitt 37''' der Führungsschiene 2 ist im Einspannabschnitt 28 angeordnet und erstreckt sich lediglich von der Spannöffnung 14 in Richtung zum Einspannende 15, wobei der vierte Verschleißabschnitt 37" beabstandet zum Einspannende 15 endet. An diesem vierten Verschleißabschnitt 37''' wird die die Sägekette 3 vom Antriebsritzel 11 herangezogen und hebt dabei von der Führungsschiene 2 ab. Die in Fig. 4 gezeigten verschiedenen Verschleißabschnitte 37, 37', 37", 37''' stellen lediglich eine beispielhafte Anordnung da. Es kann zweckmäßig sein, die Positionierung der Verschleißabschnitte 37, 37', 37", 37''' sowie deren Anzahl zu variieren. Jeder Verschleißabschnitt 37, 37', 37", 37''' weist einen durch eine Schweißung 37 gehärteten Bereich 25 sowie die angepasste, erste Nuttiefe c auf. Die Aufhärtung im gehärteten Bereich 25 ist durch eine Laserschweißung, eine Buckelschweißung, eine Punktschweißung oder durch eine Kombination der genannten Schweißverfahren bewirkt. Alternativ kann die Aufhärtung im gehärteten Bereich nicht durch ein Schweißverfahren, sondern gezielt durch ein Härteverfahren, insbesondere Laserhärten, vorzugweise Induktionshärten erfolgen. Die in Fig. 4 gezeigten Verschleißabschnitte 37, 37', 37", 37''' zeigen schematisch auf der ersten Längsseite sowie der zweiten Längsseite verschiedene Schweißungen 34. Grundsätzlich ist die Führungsschiene 2 in Blickrichtung auf die Längsebene symmetrisch zur Längsmittelachse 17 ausgebildet. Die Längsebene liegt in der Führungsschiene 2 in Richtung von der ersten Längsseite 19 zur zweiten Längsseite 20 und enthält die Längsmittelachse 17. Durch die symmetrische Ausbildung der Führungsschiene 2 kann diese im Arbeitsgerät gewendet eingespannt werden, um einen gleichmäßigen Verschleiß an der Führungsschiene 2 zu erzielen. Demnach sind die verschleißbehafteten Einlaufbereiche 38 sowohl auf der ersten Längsseite 19 als auch auf der zweiten Längsseite 20 vorzusehen. Ein Einlaufbereich 38 bildet bei geschwenkter Führungsschiene einen weniger verschleißbehafteten Auslaufbereich 39 (siehe auch Figuren 5 und 7).

In Fig. 5 ist ein weiteres Ausführungsbeispiel einer Führungsschiene 2 gezeigt, in welchem die Führungsschiene 2 einen Umlenkstern 49 umfasst. Der Umlenkstern 49 ist drehbar am Umlenkabschnitt 27 der Führungsschiene 2 gelagert. Der Umlenkstern 49 ist zwischen den beiden Seitenelementen 30, 30' angeordnet. Im Umlenkabschnitt 27 der Führungsschiene 2 ist die Sägekette 3 nicht mehr auf den Führungsflächen 21, 21' der Seitenelemente 30, 30', sondern auf dem Umlenkstern 49 geführt. Die in Fig. 5 gezeigte Führungsschiene 2 umfasst ebenfalls vier Verschleißabschnitte 37, 37', 37", 37''', deren Anordnung im Wesentlichen der in Ausführungsbeispiel Fig. 4 entspricht. Der erste Verschleißabschnitt 37 erstreckt sich von dem Einspannende 15 bis zur Spannöffnung 14. Der zweite Verschleißabschnitt 37' bilden einen Auslaufbereich 39, da die Sägekette 3 von dem zweiten Verschleißabschnitt 37' unmittelbar auf den Umlenkstern 49 gehoben wird. Der dritte Verschleißabschnitt 37" bildet einen Einlaufbereich 38 an der zweiten Längsseite 20 der Führungsschiene 2 benachbart zum Umlenkstern 49. Der vierte Verschleißabschnitt 37''' erstreckt sich im Einspannabschnitt 28 von der Spannöffnung 14 in Richtung zum Einspannende 15, wobei der vierte Verschleißabschnitt 37''' beabstandet zum Einspannende 15 hin endet.

In den Figuren 6 und 7 sind Ausführungsbeispiele der Führungsschiene 2 als Vollschiene gezeigt. Demnach sind die beiden Seitenelement 30, 30' und der Mittelabschnitt 31 einteilig ausgebildet. Die Seitenelemente 30, 30' und der Mittelabschnitt 31 bestehen aus lediglich einem Werkstoff. Ein Fügen der Seitenelemente 30, 30' mit dem Mittelabschnitt 31 ist daher nicht notwendig. Somit entfällt die Notwendigkeit, die Seitenelemente 30, 30' mit dem Mittelabschnitt 31 zu verschweißen. Daher ist in den bevorzugten Ausführungsbeispielen die Aufhärtung der gehärteten Bereiche 25 durch Laserhärten, insbesondere durch Induktionshärten vorgesehen. Alternativ kann die Aufhärtung auch durch Schweißungen vorgenommen werden. In einer solchen Ausführung bestünde die Aufgabe der Schweißung lediglich in der Aufhärtung des Mittelabschnittes 31, nicht jedoch in der stoffschlüssigen Verbindung der Seitenelemente 30, 30' mit dem Mittelabschnitt 31. Wird die Aufhärtung durch das Schweißen erzielt, ist wie oben beschrieben, ein Schmelzen des Werkstoffes nicht notwendig, vorzugsweise nicht vorgesehen. Der Energieeintrag beim Schweißen ist bereits unter der Schmelztemperatur des Werkstoffes ausreichend hoch, um eine Austenitisierung zu erzielen.

Die Anordnung und Ausbildung der Verschleißbereiche 37, 37', 37", 37''' der in Figur 6 gezeigten Ausführung der Führungsschiene 2 entspricht dem Ausführungsbeispiel der Führungsschiene nach Figur 3. Die Anordnung und Ausbildung der Verschleißbereiche 37, 37', 37", 37''' der in Figur 7 gezeigten Ausführung der Führungsschiene 2 entspricht dem Ausführungsbeispiel der Führungsschiene 2 nach Fig. 4.

Als Aufhärtung bzw. Härtung ist eine Härtesteigerung des Werkstoffes von mindestens 25% zu verstehen. Der gehärtete Bereich des Mittelabschnittes weist vorzugsweise gegenüber dem Ausgangszustand des Mittelabschnittes eine Härtesteigerung von mindestens 50%, vorzugsweise von mindestens 75%, insbesondere von in etwa 100% auf. Vorzugsweise weisen die gehärteten Führungsflächen 21 im Verschleißabschnitt 37 eine Härtesteigerung von mindestens 50%, vorzugsweise von mindestens 75%, insbesondere von in etwa 100% auf. Die Härte des Mittelabschnittes 31 liegt außerhalb des gehärteten Bereiches 25 in einem Bereich von etwa 150 bis 250 HV10. Im bevorzugten Ausführungsbeispiel beträgt die Härte des Mittelabschnittes 31 außerhalb des gehärteten Bereichs 25 in etwa 200 HV10. Die Härte im gehärteten Bereich 25 des Mittelabschnitts 31 liegt vorzugsweise in einem Bereich zwischen 350 bis 450 HV10 und beträgt in einem besonders bevorzugten Ausführungsbeispiel in etwa 400 HV10. Die Seitenelemente 30 weisen eine Basishärte, also eine Härte außerhalb eines gehärteten Bereiches, auf, die in einem Bereich zwischen 350 bis 450 HV10 liegt. Die Basishärte beträgt bevorzugt 400 HV. Die Seitenelemente 30 weisen in gehärteten Bereichen vorzugsweise eine Härte auf, die in einem Bereich zwischen 650 bis 750 HV10 liegt. Die Härte beträgt bevorzugt im gehärteten Bereich 700 HV10. Für Vollschienen gelten die genannten Härtewerte der Seitenelemente 30 auch für den Mittelabschnitt 31.

## Patentansprüche

1. Führungsschiene für eine Motorkettensäge,
- wobei die Führungsschiene (2) einen Einspannabschnitt (28) und ein freies Ende (16) aufweist, wobei an dem freien Ende (16) ein Umlenkabschnitt (27) angeordnet ist,
- wobei die Führungsschiene (2) zwei Seitenelemente (30) aufweist, wobei die Seitenelemente (30) sich vom Einspannabschnitt (28) zum Umlenkabschnitt (27) erstrecken und den Umlenkabschnitt (27) bilden,
- wobei die Führungsschiene (2) eine umlaufende Führungsnut (4) und einen zwischen den Seitenelementen (30) angeordneten Mittelabschnitt (31) aufweist, wobei der Mittelabschnitt (31) einen Nutgrund (23) der Führungsnut (4) bildet und eine Randschicht (24) aufweist,
**dadurch gekennzeichnet, dass** die Randschicht (24) mindestens einen gehärteten Bereich (25) umfasst, der sich von einem ersten Ende (32) mit einer ersten Randschichttiefe (t₁) bis zu einem zweiten Ende (33) mit einer zweiten Randschichttiefe (t₂) erstreckt, wobei die erste Randschichttiefe (t₁) und die zweite Randschichttiefe (t₂) orthogonal zum Nutgrund (23) gemessen sind, wobei die erste Randschichttiefe (t₁) am ersten Ende (32) geringer ist als die zweite Randschichttiefe (t₂) am zweiten Ende (33), und dass die zweite Randschichttiefe (t₂) am zweiten Ende (33) größer 1 mm ist und dass die erste Randschichttiefe (t₁) am ersten Ende (32) des gehärteten Bereiches (25) höchstens 3 mm beträgt.

2. Führungsschiene nach Anspruch 1,
**dadurch gekennzeichnet, dass** der mindestens eine gehärtete Bereich (25) durch eine Schweißung (34) der Führungsschiene (2) aufgehärtet ist.

3. Führungsschiene nach Anspruch 2,
**dadurch gekennzeichnet, dass** die Schweißung (34) einen Schweißmittelpunkt (40) mit einem Abstand (a) zum Nutgrund (23) aufweist, wobei der Abstand (a) kleiner 6 mm ist.

4. Führungsschiene nach einem der Ansprüche 1 bis 3,
**dadurch gekennzeichnet, dass** die Randschicht (24) eine orthogonal zum Nutgrund (23) gemessene Randschichttiefe (t_{R}) aufweist, wobei die Randschichttiefe (t_{R}) weniger als 50% einer maximalen Höhe (h) der Führungsschiene (2) beträgt.

5. Führungsschiene nach einem der Ansprüche 1 bis 4,
**dadurch gekennzeichnet, dass** die Führungsschiene (2) eine Vollschiene ist und aus einem einzigen Werkstoff besteht.

6. Führungsschiene nach einem der Ansprüche 1 bis 4,
**dadurch gekennzeichnet, dass** die Führungsschiene (2) mehrteilig ausgebildet ist, wobei mindestens ein Seitenelement (30) und der Mittelabschnitt (31) durch die Schweißung (34) miteinander verbunden sind, wobei die Schweißung (34) die Aufhärtung des mindestens einen gehärteten Bereiches (25) des Mittelabschnittes (31) bewirkt.

7. Führungsschiene nach einem der Ansprüche 2 bis 6,
**dadurch gekennzeichnet, dass** die Schweißung (34) eine Buckelschweißung, vorzugsweise eine Punktschweißung, ist.

8. Führungsschiene nach Anspruch 7,
**dadurch gekennzeichnet, dass** die Schweißung (34) mehrere Schweißpunkte (35) umfasst, wobei benachbarte Schweißpunkte (35) einen Abstand (b) von höchstens 15 mm, insbesondere von höchstens 10 mm, vorzugsweise von höchstens 7 mm aufweisen.

9. Führungsschiene nach einem der Ansprüche 1 bis 8,
**dadurch gekennzeichnet, dass** sich der gehärtete Bereich (25) der Randschicht (24) in Bewegungsrichtung (26) einer auf der Führungsschiene (2) führbaren Sägekette (3) über einen Verschleißabschnitt (37) erstreckt.

10. Führungsschiene nach Anspruch 9,
**dadurch gekennzeichnet, dass** die Führungsnut (4) der Führungsschiene (2) im Verschleißabschnitt (37) eine erste Nuttiefe (c) aufweist, wobei die erste Nuttiefe (c) gegenüber einer außerhalb des Verschleißabschnitts (37) vorgesehenen, zweiten Nuttiefe (d) reduziert ist.

11. Führungsschiene nach Anspruch 9 oder 10,
**dadurch gekennzeichnet, dass** die erste Nuttiefe (c) derart angepasst ist, dass eine für die Führungsschiene (2) vorgesehene Sägekette (3) mit ihren Treibgliedern den Nutgrund (23) im Verschleißabschnitt (37) kontaktiert.

12. Führungsschiene nach einem der Ansprüche 9 bis 11,
**dadurch gekennzeichnet, dass** die Führungsschiene (2) eine erste Längsseite (19) und eine zweite Längsseite (20) aufweist, wobei an jedem Seitenelement (30) eine Führungsfläche (21) ausgebildet ist, die sich entlang der Längsseiten (19, 20) der Führungsschiene (2) erstrecken, wobei die Führungsflächen (21) zumindest im Verschleißabschnitt (37) aufgehärtet sind.

13. Führungsschiene nach einem der Ansprüche 1 bis 12,
**dadurch gekennzeichnet, dass** die Randschicht (24) des Mittelabschnitts (31) mehrere gehärtete Bereiche (25) aufweist.

14. Führungsschiene nach einem der Ansprüche 1 bis 13,
dass an dem Umlenkabschnitt (27) mindestens ein gehärteter Bereich (25) ausgebildet ist.

15. Führungsschiene nach einem der Ansprüche 13 oder 14,
**dadurch gekennzeichnet, dass** die Führungsschiene (2) mindesten einen Einlaufbereich (38) und mindestens einen Auslaufbereich (39) umfasst, wobei an dem mindestens einen Einlaufbereich (38) und/oder dem mindestens einen Auslaufbereich (39) ein gehärteter Bereich (25) ausgebildet ist.
